# EUROPÄISCHE PATENTANMELDUNG

(11) **EP 2 221 933 A1**
(43) Veröffentlichungstag der Anmeldung: **25.08.2010**
(21) Anmeldenummer: 09153436.2
(22) Anmeldetag: 23.02.2009
(51) Int. Cl.: H02G 15/007

(54) **Kabelmuffe mit integrierten Kabelbindern**

(71) Anmelder: GT Elektrotechnische Produkte GmbH, 79761 Waldshut-Tiengen (DE)
(72) Erfinder: Paulmann, Uwe, 79790 Dangstetten (DE)

(57) **Zusammenfassung**

Eine Kabelmuffe für die Aufnahme von einem oder mehreren elektrisch leitenden Kabelenden, besteht im wesentlichen aus einem Grundkörpergehäuse, das aus zwei Halbschalen besteht. Das Grundkörpergehäuse weist wenigstens eine Durchtrittsöffnung für die Hindurchführung mindestens eines Kabels auf.

Die Erfindung zeichnet sich dadurch aus, dass im Bereich der Durchtrittsöffnungen (3, 4) ein Kabelbinder (13), bestehend aus einem Kabelband (13a) und einem Rastelement (13b) zur Fixierung des Kabels (6, 7) an dem Grundkörpergehäuse (2) vorgesehen ist. Die Kabelmuffe ist u.a. als Hausanschlussmuffe oder als Kabelmuffe für den Telekommunikations- und EDV-Bereich anwendbar.

## Beschreibung

### Technisches Gebiet

Die Erfindung bezieht sich auf eine Kabelmuffe für die Aufnahme von ein oder mehreren elektrisch leitenden Kabeln, bestehend im wesentlichen aus einem Grundkörpergehäuse, das aus zwei Halbschalen besteht.

Das Grundköpergehäuse weist wenigstens eine Durchtrittsöffnung für die Hindurchführung mindestens eines Kabels.

### Stand der Technik

Aus der EP 531 276A ist eine Kabelmuffe bekannt, die aus einem Grundkörpergehäuse mit zwei Halbschalen besteht, wobei stirnseitig Durchtrittsöffnungen vorgesehen sind.

Aus der CH 566 658 A sowie aus der DE 20 50536 A sind Dichtungselemente bekannt, die Teil dieser Kabelmuffen sind, um zu gewährleisten, dass die Dichtigkeit der Kabelmuffe bei eingeführten Kabeln gegenüber Umwelteinflüssen, insbesondere Feuchtigkeit, gegeben ist.

Aus der DE10 2007 035 709A1 ist eine Kabelmuffe für Glasfaserkabel bekannt. Als bevorzugte Ausführungsform ist eine Hausanschlussmuffe vorgesehen, die sich dadurch auszeichnet, dass sie zuverlässig die Eigenschaften einer Kabelmuffe ausführt. Zudem weist sie die Eigenschaft auf, dass diese eine Zugentlastung des Kabels zeigt. Diese Kabelmuffe besteht aus einer kassettenartigen Ausbildung bestehend aus einem Unterteil und einem Oberteil, die halbschalenartig ausgebildet sind. Unmittelbar nach der Montage der entsprechenden Lichtwellenleiter wird die gesamte Kabelmuffe unter Wärme gesetzt, sodass das Gehäuse der Kabelmuffe schrumpft und eine entsprechende Dichtigkeit des Gehäuses erzielt wird. Zuvor sind die entsprechenden Kabel, beziehungsweise die Lichtewellenleiter innerhalb des Gehäuses durch vorgesehene Fixiereinrichtung in der Ausbildung von schraubbaren Schellen oder einklemmbaren Fixierelementen befestigt worden.

### Nachteile des Standes der Technik

Ein wesentlicher Nachteil des Standes der Technik besteht darin, dass während der Montage die Kabel nicht an den entsprechenden Halbschalen zu fixieren sind. Vielmehr sind die jeweiligen Kabel und/oder Kabelenden n in die Durchtrittsöffnungen (halbschalenartig geöffnet) einzulegen und in der Halbschale entsprechend anzuordnen. Durch das Zusammenklappen und Hinzuführen der weiteren Halbschale wird das Grundkörpergehäuse geschlossen und die entsprechenden Kabel im Bereich der Durchtrittsöffnung oder auch im Bereich der Zusammenführung beziehungsweise Abzweigung innerhalb der Kabelmuffe möglicherweise zum Teil fixiert. Die Fixierung erfolgt jedoch nur provisorisch, da sie Kabel von jeweiligen Querstegen innerhalb der Halbschalen geklemmt werden. Eine Torsions- oder Zugentlastung ist nicht gegeben.

Dadurch ist es möglich, dass die entsprechenden Kabel herausrutschen und so möglicherweise die Funktion der entsprechenden Kabelmuffe nicht gewährleistet wird. Eine Zugentlastung ist jedoch nur dann gegeben, wenn entsprechende Kabelschellen angebracht werden, die mittels Schrauben oder vergleichbaren Klemmmechanismen in der Halbschale anzubringen sind. In der Regel sind solche Schellen vorgesehen, die mit mehr als zwei Schrauben zu fixieren sind. Da die Schellen jedoch in unterschiedlichen lichten Weiten bereitgestellt werden müssen, so dass diese an den jeweiligen Aussendurchmessern der Kabel anliegen, ist es zum einen notwendig diese bereitzustellen und zum anderen aber auch notwendig, die entsprechende Halterung in der Kabelmuffe anzuordnen. Um diesem Anspruch gerecht zu werden, sind für unterschiedliche Kabeldurchmesser eine Vielzahl von unterschiedlichen Kabelmuffen, die sich ausschliesslich im Bereich der Durchtrittsöffnungen unterscheiden, bereitgestellt.

Insbesondere bei der Verwendung von unterschiedlichen Durchmessern von Kabeln besteht die Gefahr, dass diese durch überdimensionierte Durchtrittsöffnungen hindurchrutschen, nicht entsprechend gefasst werden können und eine so nicht korrekt innerhalb der Kabelmuffe angeordnet werden können. Dadurch besteht auch die Gefahr, dass im Bereich der Durchtrittsöffnungen die Dichtungsanforderung an die Kabelmuffe nicht mehr gewährleistet ist, sodass wiederum die Gefahr besteht, dass die technische Funktion der Kabelmuffe nicht gewährleistet ist.

Ein weiterer Nachteil der aus dem Stand der Technik bekannten Kabelmuffen besteht darin, dass bei Installation von nachrichtentechnischen Kabeln, beispielsweise Telekommunikationskabeln, eine Vielzahl von Werkzeugen benötigt wird, um die Kabel innerhalb einer solchen Kabelmuffe einzulegen und gegen Zug zu sichern.

Tritt ein Kabelschaden beispielsweise bei einer Kabelmuffe auf, so ist zunächst für eine Leitwarte, die die Schadensmeldung aufnimmt, unklar, um welche Art von Kabeln, insbesondere um welche Durchmesser es handelt. Daher ist es notwendig, dass der Schaden zunächst inspiziert wird, um so die notwendigen Bauteile für die Schadensbehebung bereitstellen zu können. Eine zweite Anfahrt an die Schadensstelle wird notwendig. Eine Schnellreparatur ist nicht möglich.

### Aufgabe der Erfindung

Aufgabe der Erfindung ist es, eine Kabelmuffe bereitzustellen, mittels der zumindest ein Teil der Nachteile des Standes der Technik vermieden werden.

Die Lösung der Aufgabe ist durch Anspruch 1 gegeben.

### Vorteile der Erfindung

Aufgrund dessen, dass Fixiereinrichtungen, wie beispielsweise Kabelbinder integrativer Bestandteil eines Grundkörpergehäuses einer Kabelmuffe sind, ist es möglich, dass bei aufgeklappter Kabelmuffe ein Vorfixieren der entsprechenden Kabel im Bereich der Durchtrittsöffnung möglich ist. Dadurch ist es für den Anwender wiederum sehr viel einfacher, die entsprechenden Kabelenden innerhalb der entsprechenden Kabelmuffe zu positionieren, da nicht mehr die Gefahr besteht, dass die Kabel in irgendeiner Art und Weise aus der Kabelmuffe herausrutschen können.

Für die Montage sind keinerlei Werkzeuge notwendig, da alle notwendigen Hilfsmittel, wie beispielsweise die Fixier- oder Zugentlastung in Ausbildung der Kabelbinder integrativer Bestandteil des Gehäusegrundkörpers sind.

Sind mehrere Durchtrittsöffnungen vorgesehen, so wird vorzugsweise vorgeschlagen, die Kabelbinder mittig zwischen den beiden Durchtrittsöffnungen anzuordnen, sodass diese zur Fixierung der entsprechenden Kabel nach aussen hin geführt werden können. Die Kabelbinderseite besteht in der Regel aus einem Kabelband und jeweils einem Rastelement. Bei der erfindungsgemässen Lösung ist vorgesehen, dass das Kabelband integrativer Bestandteil der entsprechenden Halbschale des Grundkörpergehäuses ist und die entsprechende Rastelemente auf der den Kabelbindern gegenüberliegenden Seite auch innerhalb des Gehäuses entsprechend angeordnet sind. Dies bietet die Möglichkeit, dass die Kabelbänder des entsprechenden Kabelbinders bei bereits erfolgter Fixierung und geschlossener Kabelmuffe weiter angezogen werden, da die freien Enden der Kabelbänder durch das Rastelement hindurch geführt werden und aus dem Grundkörpergehäuse herausragen. Stehen diese über und ist die entsprechenden Fixierung bereits erfolgt, so ist es auch möglich, die überstehenden Kabelbänder der Kabelbinder abzuschneiden.

Die Fixierung erfolgt vollkommen unabhängig von dem jeweiligen Durchmesser des Kabels bzw. des Kabelendes. Aufgrund dessen, dass als Fixiereinrichtung Kabelbinder verwendet werden, können diese unabhängig von dem Durchmesser des Kabels eingesetzt werden, da sich das Kabelband immer an der Ummantelung des Kabels anlegen kann.

Ferner kann vorteilhafterweise vorgesehen werden, anstelle von bekannten Rastverschlüssen zur Schliessung der Halbschalen ein oder mehrere zusätzliche Kabelbinder vorzusehen, die entweder die Halbschalen im geschlossenen Zustand umschliessen oder anderweitig die beiden Halbschalen miteinander verbinden. Dadurch ergibt sich auch der Vorteil, dass die Halbschalen wieder zu öffnen sind.

Ein weiteres Ausführungsbeispiel sieht vor, dass die Kabelbinder zur Schliessung der Halbschalen ebenfalls integraler Bestandteil des Grundkörpergehäuses sind.

Um zu verhindern, dass eine Vielzahl von Kabelmuffen herzustellen sind, die unterschiedliche Durchmesser von Durchtrittsöffnungen aufweisen, wird vorzugsweise vorgeschlagen, eine einzige Kabelmuffe mit einem entsprechend grossen Durchmesser der Durchtrittsöffnung herzustellen und je nach Wahl der entsprechenden Kabel Adapterelemente in diese Bereiche einzufügen, sodass die Durchmesser der entsprechenden Durchtrittsöffnung der Wahl der entsprechenden Durchmesser der Kabel entsprechen. Damit die Funktionen der Kabelbinder auch gewährleistet ist, weisen diese sogenannte Adapterelemente im Bereich der Durchtrittsöffnungen der Kabelmuffen auf, die es erlauben, die Kabelbänder der Kabelbinder hindurchzuführen, sodass die an sich gewünschte Funktion der Kabelbinder weiterhin uneingeschränkt bestehen bleibt.

Um zusätzlich die Fixierung der Kabel in dem Bereich der Durchtrittsöffnungen zu verbessern, sind im Bereich der Auflagen für die Kabel zusätzlich Hakenelemente vorgesehen, die auf den entsprechenden Durchmessern der Adapterelemente aufliegenden Kabel zumindest teilweise durchdringen und so auch gegen entsprechendes Herausziehen in Längserstreckung der Kabel sichern.

Die Dichtung solcher Kabelmuffen ist unterschiedlich. Aufgrund der vorteilhaften erfindungsgemässen Ausführung können alle aus dem Stand der Technik bekannten Dichtungen, wie beispielsweise gelartige Massen, Besendichtungen im Bereich der Durchtrittsöffnungen, gummiartige Lippendichtungen und andere uneingeschränkt eingesetzt werden.

Die erfindungsgemässe Kabelmuffe ist vorteilhafterweise einsetzbar im Telekommunikations- und EDV-Bereich. Sie findet aber auch Anwendung als Hausanschlussmuffe, Verteiler- bzw. Abzweigelement und als Kabelmuffe für den Schwachstrombereich.

Ferner eignet sich die Bauweise der erfindungsgemässen Kabelmuffe auch für eine thermoplastische Ausführung.

Weitere Vorteilhafte Ausgestaltungen gehen aus der nachfolgenden Beschreibung mit Zeichnungen sowie den Ansprüchen hervor.

### Zeichnungen

### Es zeigen:

- Figur 1: eine Schnittdarstellung durch ein erstes Ausführungsbeispiel einer Kabelmuffe;
- Figur 2: eine Draufsicht auf die Kabelmuffe gemäss Figur 1, bestehend aus zwei Halbschalen im aufgeklapptem Zustand;
- Figur 3: einen Schnitt durch die Kabelmuffe entlang einer Linie III - III gemäss Figur 1;
- Figur 4: eine Darstellung eines vergrösserten Bereichs der in Figur 3 dargestellten Kabelmuffe entlang einer Linienführung IV, wobei das Kabelband des Kabelbinders in das Rastelement eingeführt ist;
- Figur 5: eine Schnittdarstellung durch ein zweites Ausführungsbeispiel einer Kabelmuffe;

- Figur 6: eine Draufsicht auf die Kabelmuffe gemäss Figur 5, bestehend aus zwei Halbschalen im aufgeklapptem Zustand;;
- Figur 7: einen Schnitt durch die Kabelmuffe entlang einer Linie VII - VII gemäss Figur 5;
- Figur 8: eine Darstellung eines vergrösserten Bereichs der in Figur 7 dargestellten Kabelmuffe entlang einer Linienführung VIII;
- Figur 9: eine perspektivische Ansicht auf ein erstes Adapterelement für die Anwendungen der in den Figuren 1 bis 8 dargestellten Kabelmuffen;
- Figur 10: eine Seitenansicht auf das Adapterelement gemäss Figur 9;
- Figur 11: eine perspektivische Ansicht auf ein zweites Adapterelement für die Anwendungen der in den Figuren 1 bis 8 dargestellten Kabelmuffen;
- Figur 12: eine Draufsicht auf das Adapterelement gemäss Figur 11.

### Beschreibung der Ausführungsbeispiele

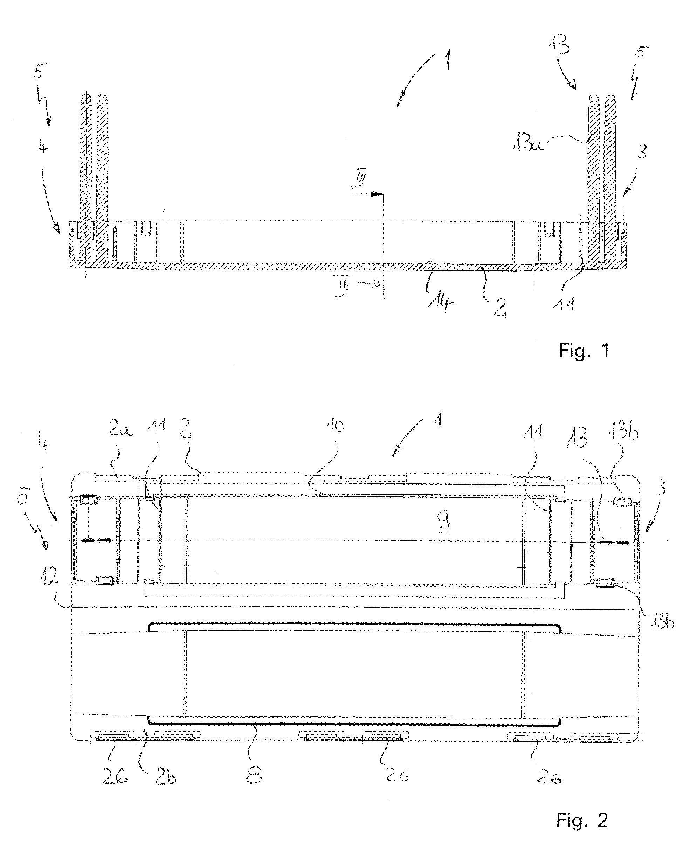

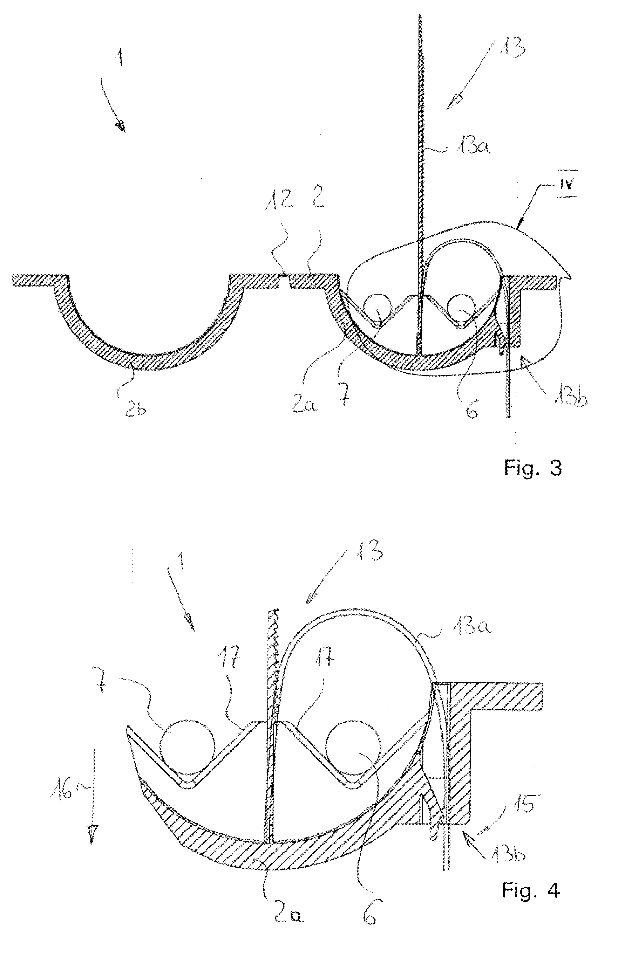

In den Figuren 1 bis 4 ist ein erstes Ausführungsbeispiel einer Kabelmuffe 1 dargestellt. Die Kabelmuffe 1 besteht aus einem Grundkörpergehäuse 2, das wiederum aus zwei Halbschalen 2a, 2b besteht. Das Grundkörpergehäuse 2 weist bei dem hier vorliegendem Ausführungsbeispiel zwei Durchtrittsöffnungen 3, 4 auf, die stirnseitig 5 an der Kabelmuffe 1 angeordnet sind. Die hier vorgesehenen Durchtrittsöffnungen 3, 4 sind derart ausgebildet, dass sie aufgrund der entsprechenden Ausgestaltung des Durchmessers zwei Kabel 6, 7 die in den Figuren 3 und 4 schematisch dargestellt sind, aufnehmen können.

Ferner weisen die Halbschalen 2a, 2b Dichtungen 8 auf, die dazu dienen, insbesondere ein inneres Gehäuseteil 9 bei zugeklappten Halbschalen 2a, 2b vor Feuchtigkeit zu schützen. Dabei liegt die Dichtung 8 auf einem Wulst 10 des inneren Gehäuseteils 9 umlaufend auf. Zusätzliche Dichtungen 11, die im Bereich der Durchtrittsöffnungen 3, 4 angeordnet sind, dienen ebenfalls dazu, das inneren Gehäuseteil 9 vor Feuchtigkeit abzuschirmen. Diese Dichtungen 11 können beispielsweise Lamellen- oder Besendichtungen sein.

Die beiden Halbschalen 2a, 2b sind über ein Filmscharnier 12 miteinander drehgelenkig verbunden. Aufgrund dessen ist es möglich, die beiden Halbschalen als ein Spritzgussteil herzustellen. Um die beiden Halbschalen 2a, 2b verschlossen zu halten, sind Rasteinrichtungen 26 vorgesehen, die bei dem hier vorgesehenen Ausführungsbeispiel die beiden Halbschalen 2a, 2b kraftschlüssig verschliessen. Ferner ist vorgesehen, dass ohne jegliche Zerstörung des Rastmechanismus die Kabelmuffe wieder zu öffnen ist.

Erfindungsgemäss ist nun vorgesehen, dass im Bereich der Durchtrittsöffnungen 3, 4 Kabelbinder 13 angeordnet sind. Die Kabelbinder 13 bestehen in der Regel aus einem Kabelband 13a sowie einem Rastelement 13b in das das Kabelband 13a einführbar ist und mit dem Rastelement 13b verrastet.

Der jeweilige Kabelbinder 13 erstreckt sich von dem Grund 14 des Grundkörpergehäuses 2 weg. Vorzugsweise ist der jeweilige Kabelbinder in einer Halbschale 2a des Grundkörpergehäuses 2 angeordnet. Der Kabelbinder 13 erstreckt sich senkrecht von dem Grund 14 weg, sodass für den Benutzer unmittelbar sichtbar wird, dass es sich um ein Fixierelement zum fixieren der in den Durchtrittsöffnungen 3, 4 anzuordnenden Kabel 6, 7 handelt. Die Kabel 6, 7 liegen auf Auflageelementen 17 auf. Diese Auflagenelemente 17 sind im Querschnitt prismenartig ausgestaltet.

Ist das entsprechende Kabel 6, 7 im Bereich der Durchtrittsöffnungen 3,4, sowie es in Figur 3 und 4 beispielhaft gezeigt ist, eingelegt, so nimmt der Benutzer das Kabelband 13a des Kabelbinders 13 und führt dieses in das Rastelement 13b ein. Das Kabelband 13a erstreckt sich durch das Rastelement 13b hindurch und tritt auf der rückwärtigen Seite der Halbschale 2a heraus. Das freie Ende 15 steht nun soweit heraus, dass der Benutzer dieses entsprechend greifen kann und weiter in Pfeilrichtung 16 in das Kabelband 13a zieht bis dieses zur Anlage an den äusseren Umfang des entsprechenden Kabels 6, 7 gelangt.

Vorzugsweise sind jeweils an den Durchtrittsöffnungen 3,4 zwei Kabelbinder 13 angeordnet, sodass die beiden Kabel 6, 7 im Bereich der Durchtrittsöffnungen 3, 4 mit den jeweiligen Kabelbindern 13 fixiert werden können.

Die Kabelbinder 13 sind vorzugsweise, und wie auch in den Figuren 1 bis 4 dargestellt, integrativer Bestandteil der entsprechenden Halbschalen 2a. Dies bedeutet, dass diese einstückig (in Figur 1 sichtbar) mit dem Grund 14 der entsprechenden Halbschale 2a des Grundkörpergehäuses 2 verbunden sind.

Die Ausbildung der Kabelbinder 13 erfolgt in der Art, wie sie aus dem Stand der Technik bekannt sind. Sie unterscheiden sich jedoch dadurch, dass das Rastelement 13b von dem Kabelband 13a des Kabelbinders 13 getrennt ist. Das Rastelement 13b ist, sowie auch zuvor bereits beschrieben, innerhalb des Grundkörpergehäuses 2 insbesondere in der Halbschale 2a angeordnet und integrativer Bestandteil dieser Halbschale 2a.

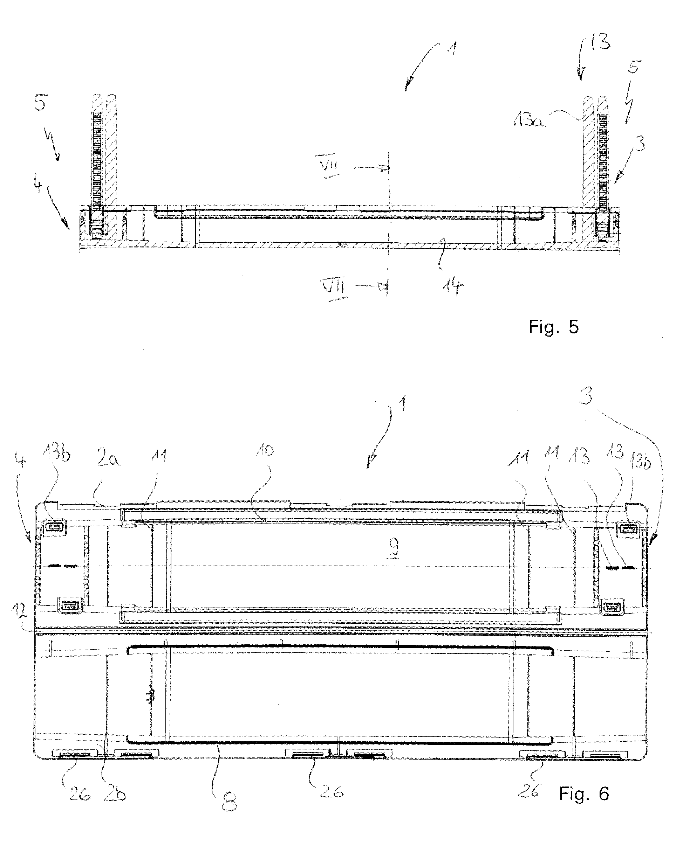

Im Gegensatz zu dem in Figuren 1 bis 4 dargestellten Ausführungsbeispiel ist bei dem in den Fig. 5 bis 8 dargestellten zweiten Ausführung des Kabelbinders 1 ein Auflageelement 17 zur Aufnahme von Kabeln 6, 7 vorgesehen, das prismenartig ausgestaltet ist. Es ist derart ausgestaltet, das ein im Querschnitt vorzugsweise rundes Kabel 6,7 innerhalb des Prismas zur Anlage kommt. Zusätzlich sind Hakenelemente 18 angeordnet, die dafür vorgesehen sind, das entsprechende Kabel 6, 7 im Hinblick auf entsprechend wirkenden Zug auf das Kabel 6, 7 innerhalb der Durchtrittsöffnung zu fixieren. Die Funktionsweise des Kabelbinders 13 ist identisch mit der bereits beim ersten Ausführungsbeispiel beschriebenen Ausführungsform. Die Kabelbänder 13a dienen ebenfalls dazu, in einem jeweiligen Ratelement 13b eingeführt zu werden und auf der rückwärtigen Seite der entsprechenden Halbschale 2a auszutreten, sodass eine Fixierung des Kabels 6 bzw. 7 gewährleistet ist.

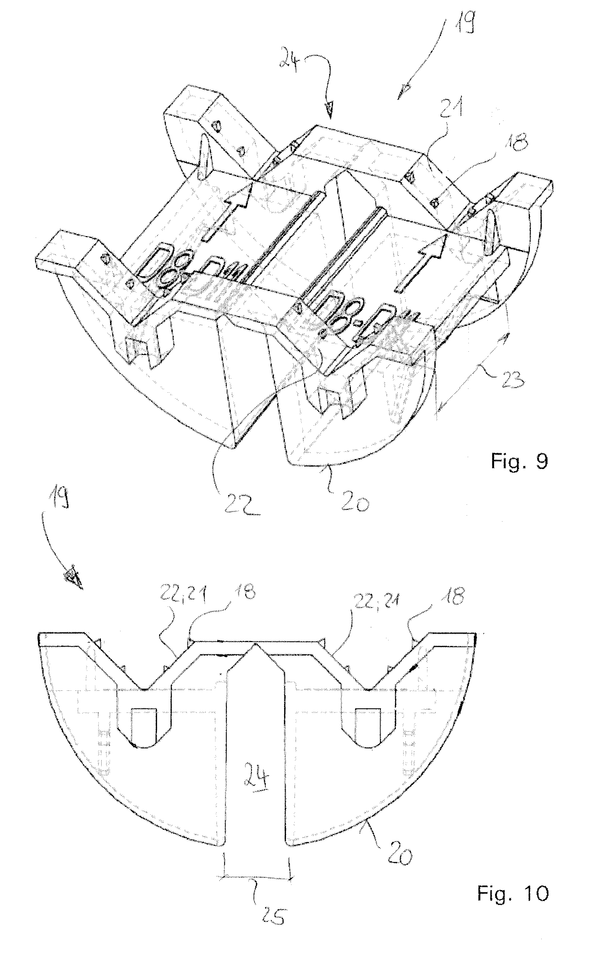

Bei den in den Figuren 9 bis 12 dargestellten Ausführungsbeispielen handelt es sich um ein Adapterelement 19, das in dem Bereich der Durchtrittsöffnungen 3, 4 einfügbar ist. Es dient dazu, die unterschiedliche Durchmesser von Kabeln aufzunehmen. Die in den Figuren 1 bis 8 dargestellte Ausführungsform dient dazu, an Kabel im einem grossen Durchmesser aufzunehmen. Vorzugsweise ist vorgesehen, Kabeldurchmesser von 15 bis 21 Millimeter aufzunehmen. Werden Kabel mit geringeren Durchmesser eingesetzt, so kann erfindungsgemäss dieselbe Kabelmuffe 1 verwendet werden, jedoch können wahlweise einer der Adapterelemente 19, wie sie in den Figuren 9 bis 12 dargestellt sind, verwendet werden.

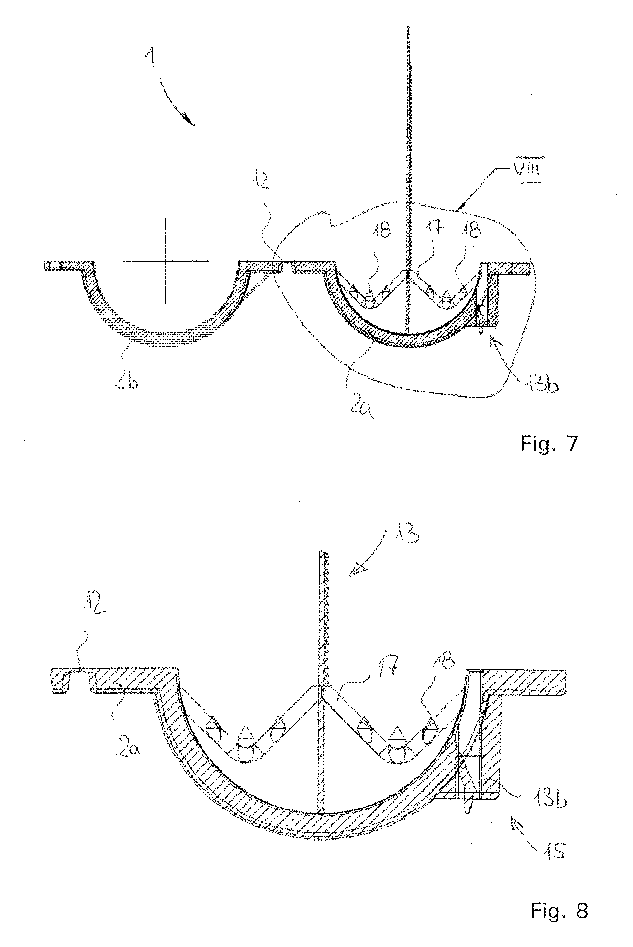

Das Adapterelement 19, das in Figur 9 und 10 dargestellt ist, ist vorzugsweise dafür vorgesehen, Kabel mit Durchmessern von 8 bis 11 Millimeter aufzunehmen. Die prismenartige Auflagefläche, wie sie auch bereits aus der Kabelmuffe gemäss Figur 7 bekannt ist, ist in ihren Abmessungen geringer. Das Adapterelement 19 selbst ist bezogen auf seine Aussenkontur 20 derart bemessen, dass diese der Innenkontur der entsprechenden Kabelmuffe 1 entspricht. Dadurch kann das Adapterelement 19 in die Ausnehmung in den Bereich der Durchtrittsöffnungen eingelegt werden. Vorzugsweise verrastet es dort.

Das Adapterelement 19 weist zwei Auflageelemente 21 bzw. 22 auf, die in einem Abstand 23 zueinander angeordnet sind. Die Ausbildung des Adapterelements 19 ist derart vorgesehen und derart bemessen, dass das Auflageelement 17, die in der Kabelmuffe 1 gemäss den Figuren 1 bis 8 fester Bestandteil ist, durch das Adapterelement 19 ausser Funktion gebracht werden kann. Vorzugsweise ist das ursprüngliche Auflageelement 17 bedeckt.

Das Adapterelement 19 zeichnet sich ferner dadurch aus, dass zusätzlich ein Öffnungsbereich 24 vorgesehen ist. Dieser Öffnungsbereich 24 mit einer entsprechenden lichten Weite, die dem Abstand 23 entspricht, ist derart bemessen, dass zwei oder mehrere Kabelbinder 13 nebeneinander entsprechend aufgenommen werden können.

Der Öffnungsbereich 24 ist derart bemessen, dass dieser mindestens eine Breite 25 aufweist, die der Breite des Kabelbands 13a des Kabelinders 13 entspricht.

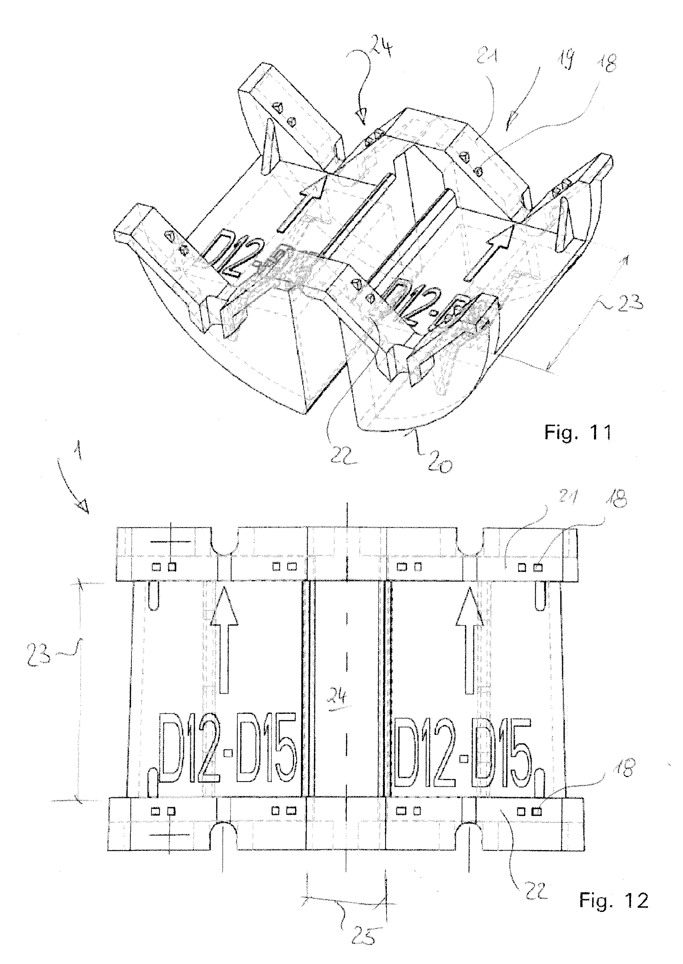

Die in den Figuren 11 und 12 dargestellten Ausführungsbeispiele der Adapterelemente 19 sind im Hinblick auf ihre Funktion identisch mit dem Ausführungsbeispiel gemäss Figuren 9 und 10. Sie sind jedoch im Unterschied zu den Figuren 9 und 10 derart bemessen, dass die Auflageelemente 21, 22 derart bemessen, dass Kabeldurchmesser der Kabel 6, 7 in Grössenordnungen von 12 bis 15 Millimeter aufgenommen werden können.

Durch die erfindungsgemässe Kabelmuffe 1 ist eine Vorrichtung bereitgestellt worden, mittels der auf sehr einfache Art und Weise Kabel, insbesondere im nachrichtentechnischen Bereich zunächst innerhalb einer Halbschale 2a eines Grundkörpergehäuses 2 einer Kabelmuffe 1 fixierbar sind, bevor diese in der inneren Gehäuseausnehmung entsprechend verdrahtet beziehungsweise abgezweigt werden. So ist eine sehr einfache Montage möglich. Zusätzlich sind die Kabel zugentlastet. Das Montieren einer Kabelschelle, wie sie an sich aus dem Stand der Technik bekannt ist und für Zugentlastungen in der Regel verwendet wird, entfällt.

Aufgrund dessen, dass die Kabelbinder integrativer Bestandteil der Kabelmuffe sind, ist eine sehr einfache und ohne weitere Hilfsmittel anzuwendende Vorrichtung geschaffen worden. Die bisherigen technischen Vorteile, die bereits aus dem Stand der Technik bekannt sind, wie beispielsweise Geldichtungen, Lamellendichtungen etc. können uneingeschränkt weiter eingesetzt und in der neuen Kabelmuffe integriert werden.

### BEZUGSZEICHENLISTE

- 1: Kabelmuffe
- 2: Grundkörpergehäuse
- 2a: Halbschale
- 2b: Halbschale
- 3: Durchtrittsöffnung
- 4: Durchtrittsöffnung
- 5: Stirnseite
- 6: Kabel
- 7: Kabel
- 8: Dichtung
- 9: Inneres Gehäuseteil
- 10: Wulst
- 11: Lamellen
- 12: Filmscharnier
- 13: Kabelbinder
- 13a: Kabelband
- 13b: Rastelement
- 14: Grund
- 15: Freies Ende
- 16: Pfeil
- 17: Auflageelement
- 18: Hakenelement
- 19: Adapterelement
- 20: Aussenkontur
- 21: Auflageelement
- 22: Auflageelement
- 23: Abstand
- 24: Öffnungsbereich
- 25: Breite
- 26: Rasteinrichtungen

## Patentansprüche

1. Kabelmuffe für die Aufnahme von einem oder mehreren elektrisch leitenden Kabelenden, bestehend im wesentlichen aus
- einem Grundkörpergehäuse, dass aus zwei Halbschalen besteht und
- das Grundkörpergehäuse wenigstens eine Durchtrittsöffnung für die Hindurchführung mindestens eines Kabels aufweist,
**dadurch gekennzeichnet, dass** im Bereich der Durchtrittsöffnungen (3, 4) mindestens ein Kabelbinder (13), bestehend aus einem Kabelband (13a) und einem Rastelement (13b) zur Fixierung des Kabels (6, 7) an dem Grundkörpergehäuse (2) vorgesehen ist, wobei der Kabelbinder (13) integrativer Bestandteil des Grundkörpergehäuses (2).

2. Kabelmuffe nach Anspruch 1, **dadurch gekennzeichnet, dass** das Rastelement (13b) innerhalb des Grundkörpergehäuses (2) in einer Halbschale (2a) angeordnet ist.

3. Kabelmuffe nach mindestens einem der vorherigen Ansprüche, **dadurch gekennzeichnet, dass** im Bereich der Durchtrittsöffnungen (3, 4) ein Adapterelement (19) zur Verringerung des Durchmessers zur Aufnahme des entsprechenden Kabels (6, 7) vorgesehen ist.

4. Kabelmuffe nach Anspruch 3, **dadurch gekennzeichnet, dass** das Adapterelement (19) einen Öffnungsbereich (24) zur Durchführung der Kabelbinder (13) aufweist.

5. Kabelmuffe nach mindestens einem der vorhergehenden Ansprüche, **dadurch gekennzeichnet, dass** das Grundkörpergehäuse (2) aus thermoplastischem Material besteht.

6. Kabelmuffe mindestens einem der vorhergehenden Ansprüche, **dadurch gekennzeichnet, dass** das Auflageelement (17, 21, 22) zur Aufnahme des Kabels (6, 7) im Bereich der Durchtrittsöffnungen (3, 4) im Querschnitt prismenartig gestaltet sind.

7. Kabelmuffe nach Anspruch 6, **dadurch gekennzeichnet, dass** auf dem Auflageelement (17, 21, 22) Hakenelemente (18) angeordnet sind.

## Geänderte Patentansprüche

### Geänderte Patentansprüche gemäss Regel 137(2) EPÜ.

**1.** Kabelmuffe (1) für die Aufnahme von einem oder mehreren elektrisch leitenden Kabeln, mit einem aus
zwei Halbschalen (2a, 2b) bestehenden Grundkörpergehäuse (2), das wenigstens eine Durchtrittsöffnung (3; 4) für die Hindurchführung von mindestens einem Kabel(6; 7) aufweist, in deren Bereich mindestens ein Kabelbinder (13) vorgesehen ist, der aus einem Kabelband (13a) und einer zur Fixierung des Kabels (6; 7) dienenden Rastelement (13b) besteht,
**dadurch gekennzeichnet, dass** der Kabelbinder (13) an einer der Halbschalen (2a; 2b) des Grundkörpergehäuses (2) als deren integrativer Bestandteil vorgesehen ist.

**2.** Kabelmuffe nach Anspruch 1, **dadurch gekennzeichnet, dass** sich das Kabelband (13a) des Kabelbinders (13) derart erstreckt, dass es mit seinem freien Ende (15) durch das Rastelement (13b) hindurch aus der rückwärtigen Seite der Halbschale (2a) zum Zwecke eines Ergreifens durch einen Benutzer heraustritt.

**3.** Kabelmuffe nach mindestens einem der vorherigen Ansprüche, **dadurch gekennzeichnet, dass** im Bereich der Durchtrittsöffnungen (3, 4) ein Adapterelement (19) zur Aufnahme eines dKabels (6;7) mit geringem Durchmesser, wie zwischen 8 und 11 mm, vorgesehen ist.

**4.** Kabelmuffe nach Anspruch 3, **dadurch gekennzeichnet, dass** das Adapterelement (19) einen Öffnungsschlitz (24) zur Durchführung der Kabelbinder (13) aufweist.

**5.** Kabelmuffe nach mindestens einem der vorhergehenden Ansprüche,
**dadurch gekennzeichnet, dass** das Grundkörpergehäuse (2) aus thermoplastischem Material besteht.

**6.** Kabelmuffe mindestens einem der vorhergehenden Ansprüche, **dadurch gekennzeichnet, dass** zur Aufnahme eines Kabels (6; 7) im Bereich der Durchtrittsöffnungen (3, 4) Auflageelemente (17; 21, 22) vorgesehen sind, die einen prismenartigen Querschnitt aufweisen.

**7.** Kabelmuffe nach Anspruch 6, **dadurch gekennzeichnet, dass** auf den Auflageelementen (17; 21, 22) Hakenelemente (18) angeordnet sind.
